# EUROPÄISCHE PATENTANMELDUNG

(11) **EP 4 572 133 A1**
(43) Veröffentlichungstag der Anmeldung: **18.06.2025**
(21) Anmeldenummer: 24214767.6
(22) Anmeldetag: 22.11.2024
(51) Int. Cl.: H02S 20/24, F24S 25/636

(54) **ANORDNUNG ZUM HALTEN ZUMINDEST EINES PHOTOVOLTAIKMODULS OBERHALB EINER FLÄCHE**

(30) Priorität: 01.12.2023 DE 102023133680
(71) Anmelder: Sunkon GmbH, 31553 Sachsenhagen (DE)
(72) Erfinder: Steen, Frank, 31535 Neustadt am Rübenberge (DE); Seipel, Petric, 31515 Wunstorf (DE)
(74) Vertreter: Jabbusch, Matthias

(57) **Zusammenfassung**

Bei einer Anordnung zum Halten zumindest eines Photovoltaikmoduls oberhalb einer Fläche, insbesondere oberhalb eines Flachdachs ist vorgesehen, dass die Anordnung zumindest zwei jeweils einen Rand des Photovoltaikmoduls umgreifende Halteeinrichtungen aufweist, dass diese Halteeinrichtungen mit einem und nur einem Profilelement miteinander verbunden sind und dass das Profilelement zumindest einen Aufstellabschnitt zu seinem Aufstellen auf der Fläche hat.

Mit dieser Anordnung ist in einfacher Weise eine sichere Haltung und damit winkelige Anstellung eines Photovoltaikmoduls ermöglicht.

## Beschreibung

Die Erfindung betrifft eine Anordnung zum Halten zumindest eines Photovoltaikmoduls oberhalb einer Fläche, insbesondere oberhalb eines Flachdachs.

Photovoltaikmodule werden in Deutschland in allen Breiten eingesetzt. Auch in nördlichen Gebieten finden Photovoltaikmodule zunehmenden Einsatz, insbesondere auf mehr oder weniger steilen Hausdachabschnitten.

Nun sind einige Gebäude auch mit Flachdächern versehen. Wenn insbesondere die Inhaber derartiger Häuser eine Ausrüstung des Hauses mit Photovoltaikmodulen wünschen, dann sind in diesem Fall die Photovoltaikmodule in einem Winkel anzustellen, um ein möglichst vertikales Auftreffen von Sonnenstrahlen zu ermöglichen. Zudem bewirkt diese Anstellung auch einen selbstreinigen Effekt der Photovoltaikmodulen.

Eine derartige Aufständerung von Photovoltaikmodulen ist im Stand der Technik bekannt, vielfältige Anordnungen zum Halten von Photovoltaikmodulen wurden bereits aufgezeigt. Sie bestehen zum Teil aus mehreren Bauteilen, die vor Ort insbesondere auf dem Flachdach von Monteuren zusammenzusetzen sind.

Der Erfindung liegt die Aufgabe zugrunde, eine Anordnung der eingangsgenannten Gattung aufzuzeigen, mit der in möglichst einfacher Weise eine sichere Haltung und damit winkelige Anstellung eines Photovoltaikmoduls gelingt.

Diese Aufgabe ist erfindungsgemäß dadurch gelöst, dass die Anordnung zumindest zwei jeweils einen Rand des Photovoltaikmoduls umgreifende Halteeinrichtungen aufweist, dass diese Halteeinrichtungen mit einem und nur einem Profilelement miteinander verbunden sind und dass das Profilelement zumindest einen Aufstellabschnitt zu seinem Aufstellen auf der Fläche hat.

Die erfindungsgemäße Anordnung kann wenige Bauteile umfassen. So sind zwei Halteeinrichtungen vorgesehen und diese Halteeinrichtungen sind mit einem Profilelement miteinander verbunden. Das Profilelement verbindet beide Halteeinrichtungen, es ist in seiner Länge so ausgestaltet, dass die Verbindung der Halteeinrichtungen in dem Zustand erfolgt, in dem die Halteeinrichtungen an das Photovoltaikmodul angelegt sind. Dabei umgreifen die Halteeinrichtungen jeweils einen Rand des Photovoltaikmoduls, vorzugsweise liegen diese beiden Ränder des Photovoltaikmoduls einander gegenüber. Es kann sich um die längeren oder auch um die kürzeren Längsränder eines regelmäßig rechteckig ausgebildeten Photovoltaikmoduls handeln. Neben der Anlage des Profilelementes über die Halteeinrichtungen an das Photovoltaikmodul hat das Profilelement noch einen Aufstellabschnitt. Mit diesem Aufstellabschnitt kann es auf die Fläche aufgestellt werden, so dass die gewünschte Abstützung des Photovoltaikmoduls auf der Fläche gegeben ist.

Nach einer ersten Weiterbildung der Erfindung ist vorgesehen, dass jede Halteeinrichtung einen etwa c-förmig ausgebildeten Profilabschnitt aufweist, dessen Weite größer als die Randdicke des Photovoltaikmoduls ist. Ein c-förmig ausgebildeter Profilabschnitt kann mit dem offenen C an den Rand des Photovoltaikmoduls angelegt werden und dabei den Rand des Photovoltaikmoduls umgreifen. Ein sicheres Halten des Photovoltaikmoduls ist gewährleistet.

Zumindest einer Halteeinrichtung ist eine Festlegeeinrichtung für das Photovoltaikmodul in der Halteeinrichtung zugeordnet. Es ist wichtig, das Photovoltaikmodul in jeder Zeit zu halten, auch bei Windangriff oder bei Schneelasten. Die Festlegeeinrichtung legt die Anlage der Halteeinrichtung am Photovoltaikmodul fest. Dazu weist die Festlegeeinrichtung vorzugsweise zumindest eine auf einer Gewindewelle angeordnete Klinke auf. Durch ein Drehen der Gewindewelle wird die Lage der Klinke verändert, die Klinke kann gegen die Innenseite des Randes des Photovoltaikmoduls geführt werden und den Rand gegen die außenanliegende Halteeinrichtung, insbesondere gegen den c-förmig ausgebildeten Profilabschnitt der Halteeinrichtung, drücken und in dieser Drückstellung fixiert werden.

Die Gewindewelle der Festlegeeinrichtung ist vorzugsweise nach außen geführt und hat an ihrem freien Ende eine Werkzeugaufnahme. Somit kann die Lage der Klinke auf der Gewindewelle von außen durch Einsatz eines Werkzeuges verändert werden, das Werkzeug kann beispielsweise ein Akkuschrauber oder ein Inbusschlüssel sein.

Hinsichtlich des Aufstellabschnittes des Profilelementes sieht eine Weiterbildung der Erfindung vor, dass dieser Aufstellabschnitt ein längserstreckter und in sich ein etwa planer Abschnitt des Profilelementes ist. Mit diesem Abschnitt kann das Profilelement auf die Fläche, beispielsweise auf das Flachdach aufgestellt werden.

Dabei sieht eine Weiterbildung der Erfindung vor, dass im Aufstellabschnitt Festlegeelemente für das Profilelement angeordnet sind. Es soll das Profilelement nicht nur auf die Fläche aufgestellt werden, sondern auch an dieser befestigt werden, um das Photovoltaikmodul windsicher und schneesicher mit der Fläche zu verbinden. Die Festlegeelemente können Vorsprünge mit Hinterschneidungen umfassen. An der Fläche können dann Anlageelemente mit Vorsprüngen und Hinterschneidungen zur Aufnahme der Vorsprünge der Festlegeelemente angeordnet sein. Das Einführen von Vorsprüngen in Hinterschneidungen kann durch einen Klipsmechanismus in einfacher Weise durch Einschieben des Vorsprungs hinter die Hinterschneidung erfolgen. Dabei können die Anlageelemente profilierte Profile, insbesondere doppelte T-Profile sein.

Das Profilelement kann mit den Festlegeelementen in den Profilen verschoben werden. Dadurch sind temperaturbedingte Längenänderungen des Profilelementes ermöglicht, auch bei der Verlegung oder bei einer Änderung der Photovoltaikmodule ist hier eine Vereinfachung gegeben.

Zur weiteren Ausbildung der Erfindung kann noch vorgesehen sein, dass zumindest eine Halteeinrichtung am Profilelement lageveränderlich angeordnet ist. Auf diese Weise ist die Anlage eines Photovoltaikmoduls an die erfindungsgemäße Anordnung erleichtert. Das Photovoltaikmodul kann auf einer Seite in eine Halteeinrichtung eingestellt werden, es kann dann auf die Anordnung aufgelegt werden und die zweite Halteeinrichtung wird durch eine Lageveränderung dem noch freien Rand des Photovoltaikmoduls angenähert. Anschließend werden beide Halteeinrichtungen fest mit dem Photovoltaikmodul verbunden.

Nach einer Alternative kann aber auch vorgesehen sein, dass das Profilelement und die Halteeinrichtungen aus einem Teil gefertigt sind. Bei dieser Ausbildung bilden Profilelement und Halteeinrichtung einen Bogen, der gewisse federnde Eigenschaften hat. Eine Einlage des Photovoltaikmoduls kann durch eine Aufweitung des Profilelementes erfolgen, die Halteeinrichtungen können sich dann durch Zurückführung der Aufweitung an zwei einander gegenüberliegende Ränder des Photovoltaikmoduls anlegen. In diesem Fall ist als Festlegeeinrichtung eine Schraube zur Verbindung beider Halteeinrichtungen vorgesehen, diese Schraube verläuft unterhalb des aufgenommenen Photovoltaikmoduls von einer Halteeinrichtung bis zur anderen Halteeinrichtung.

Das Profilelement und die Halteeinrichtungen können aus einem Metall wie Aluminium oder Stahl gefertigt sein. Möglich ist aber auch eine Fertigung aus einem Kunststoff.

Gerade bei der Verwendung von leichten Werkstoffen für die Anordnung kann das Profilelement nach einer Weiterbildung der Erfindung Auflageabschnitte zur Auflage von Ballastgewichten aufweisen. Diese festigen die Auflage der Anordnung auf der Fläche.

Ausführungsbeispiele der Erfindung sind in der Zeichnung dargestellt. Es zeigen:
- Figur 1:: eine perspektivische Ansicht eines Photovoltaikmoduls, aufgeständert angeordnet in einer erfindungsgemäßen Anordnung zum Halten nach einem ersten Ausführungsbeispiel;
- Figur 2:: eine Seitenansicht des Photovoltaikmoduls und der Anordnung gemäß Figur 1;
- Figur 3:: eine Teilseitenansicht des Photovoltaikmoduls und der Anordnung gemäß Figur 1;
- Figur 4:: eine maßstäblich vergrößerte Ansicht der Einzelheit X in Figur 3;
- Figur 5:: eine Schnittansicht des Photovoltaikmoduls und der Anordnung gemäß Figur 1;
- Figur 6:: eine maßstäblich vergrößerte Ansicht der Einzelheit Y in Figur 5;
- Figur 7:: eine maßstäblich vergrößerte Ansicht der Einzelheit Z in Figur 5;
- Figur 8:: eine Seitenansicht eines Photovoltaikmoduls und einer erfindungsgemäßen Anordnung zum Halten nach einem zweiten Ausführungsbeispiel;
- Figur 9:: eine Seitenansicht eines Photovoltaikmoduls und einer erfindungsgemäßen Anordnung nach einem dritten Ausführungsbeispiel;
- Figur 10:: eine perspektivische Ansicht eines Photovoltaikmoduls und eine Anordnung zum Halten des Photovoltaikmoduls nach Figur 1 mit einem zusätzlichen Bauteil.

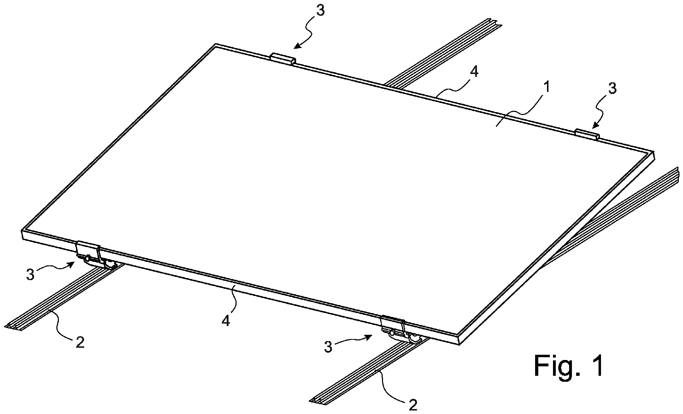

Figur 1 zeigt das Photovoltaikmodul 1 in einer winkeligen Anordnung oberhalb einer nicht weiter dargestellten Fläche. Zum Halten des Photovoltaikmoduls 1 in dieser Ausrichtung ist die erfindungsgemäße Anordnung vorgesehen, welche Anlageelemente 2 zum Anlegen an die Fläche umfasst. Die Anlageelemente 2 sind profilierte Profile, die in einem Abstand zueinander und in paralleler Ausrichtung zueinander auf die Fläche aufgelegt sind.

An das Photovoltaikmodul sind Halteeinrichtungen 3 angelegt. Diese Halteeinrichtungen 3 umgreifen einander gegenüberliegende Längsränder 4 des Photovoltaikmoduls 1. Die Halteeinrichtungen 3 stehen mittelbar auf den Anlageelementen 2 auf.

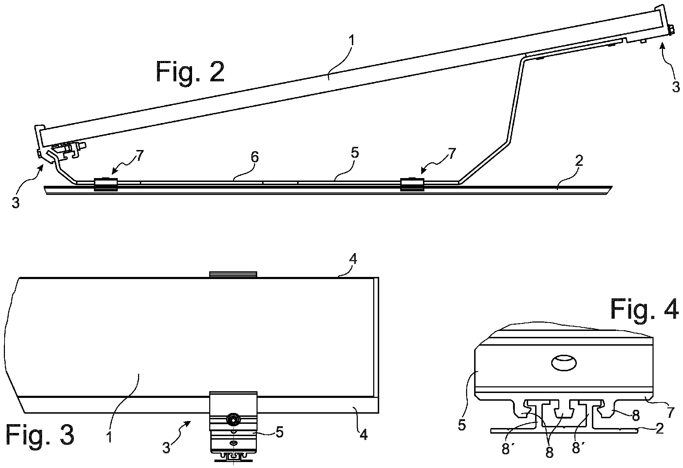

Figur 2 zeigt, dass die Halteeinrichtungen 3 mit einem Profilelement 5 miteinander verbunden sind. Profilelement 5 und Halteeinrichtungen 3 bilden einen Bogen aus, der an die Unterseite des Photovoltaikmoduls 1 angelegt ist. Ein planer Abschnitt 6 des Profilelementes 5 dient zur Auflage des Profilelementes 5 auf dem Anlageelement 2. Profilelement 5 und Anlageelement 2 werden mit Festlegeelementen 7 miteinander verbunden. Diese Verbindung ist auch in Figur 3 gezeigt. Das Photovoltaikmodul 1 ist hier mit einer vorderen Ecke aus der Ansicht von Figur 1 zu sehen. Die Halteeinrichtung 3 übergreift den vorderen Rand 4 des Photovoltaikmoduls 1. Insbesondere Figur 4 zeigt, dass das Festlegeelement 7 Vorsprünge 8 mit Hinterschneidungen umfasst. Die Profile der Anlageelemente 2 sind als Doppel-T-Profile gleichfalls mit Vorsprüngen 8' und Hinterschneidungen ausgebildet. Es wird ein Schnappverschluss geschaffen, die Festlegeelemente 7 können in die Doppel-T-Profile der Anlageelemente eingeklipst werden. Dabei bleiben die Festlegeelemente 7 und damit die Profilelemente 5 auf den Anlageelementen 2 verschiebbar.

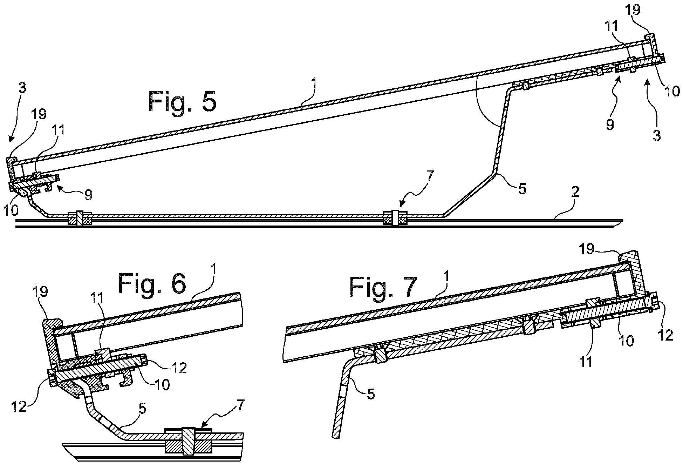

Figur 5 zeigt mit den maßstäblich vergrößerten Ansichten in Figur 6 und Figur 7 die Ausgestaltung der Halteeinrichtungen 3 nach dem ersten Ausführungsbeispiel. Jede Halteeinrichtung 3 umfasst einen c-förmigen Profilabschnitt 19. Dieser kann den Rand 4 des Photovoltaikmoduls 1 umgreifen. Beide Halteeinrichtungen 3 haben Festlegeeinrichtungen 9 für das Photovoltaikmodul 1. Diese Festlegeeinrichtungen 9 umfassen jeweils eine Gewindewelle 10, auf der eine Klinke 11 kämmend angeordnet ist. Durch ein Drehen der Gewindewelle 10 kann die Klinke 11 auf der Gewindewelle 10 bewegt werden. Durch entsprechendes Drehen kann also die Klinke 11 gegen den Randbereich 4 des Photovoltaikmoduls 1 geführt werden und diesen gegen die Innenseite der c-förmig ausgebildeten Profilabschnitte 19. Damit gelingt ein Festlegen des Photovoltaikmoduls 1 in den Halteeinrichtungen 3. Figuren 6 und 7 zeigen, dass an den freien Enden der Gewindewellen 10 Werkzeugansetzabschnitte 12 angeordnet sind.

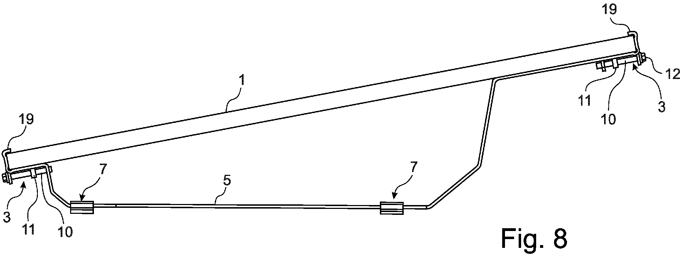

Bei dem zweiten Ausführungsbeispiel der erfindungsgemäßen Anordnung nach Figur 8 sind das Profilelement 5 und die Halteeinrichtungen 3 im Wesentlichen einstückig und einteilig ausgebildet. Es sind wieder Festlegeelemente 7 vorgesehen, für die Längsränder des Photovoltaikmoduls 1 stehen auch wieder Klinken 11 auf Gewindewellen 10 zum Festlegen zur Verfügung.

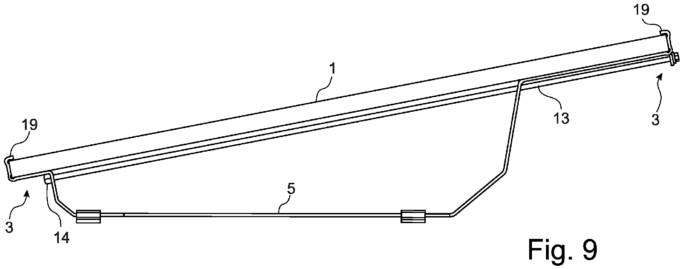

Bei dem Ausführungsbeispiel nach Figur 9 ist auch eine einteilige Ausbildung von Profilelement 5 und Halteeinrichtungen 3 gegeben. Hier wird keine Klinke 11 zum Festlegen des Photovoltaikmoduls 1 in den Halteeinrichtungen 3 bereitgehalten, vielmehr kommt eine lange Schraube 13 zum Einsatz, auf die eine Mutter 14 aufgeschraubt ist. C-förmige Profilabschnitte 19 sind vorgesehen, sie werden durch ein Anziehen der Mutter 14 auf der Schraube 13 einander angenähert, wodurch ein Festlegen des Photovoltaikmoduls in den Halteeinrichtungen 3 erfolgt.

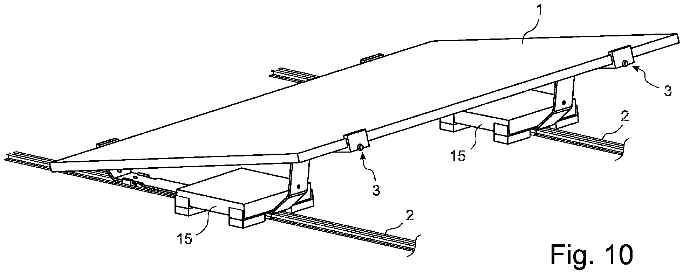

Figur 10 zeigt exemplarisch für alle Ausführungsbeispiele das Auflegen von Ballastgewichten 15 auf entsprechend ausgewählte Abschnitte der erfindungsgemäßen Anordnung.

## Patentansprüche

1. Anordnung zum Halten zumindest eines Photovoltaikmoduls oberhalb einer Fläche, insbesondere oberhalb eines Flachdachs,
**dadurch gekennzeichnet,**
**dass** sie zumindest zwei jeweils einen Rand (4) des Photovoltaikmoduls (1) umgreifende Halteeinrichtungen (3) aufweist, dass diese Halteeinrichtungen (3) mit einem und nur einem Profilelement (5) miteinander verbunden sind und dass das Profilelement (5) zumindest einen Aufstellabschnitt zu seinem Aufstellen auf der Fläche hat.

2. Anordnung nach Anspruch 1, **dadurch gekennzeichnet, dass** jede Halteeinrichtung (3) einen etwa c-förmig ausgebildeten Profilabschnitt (19) aufweist, dessen Weite größer als die Randdicke des Photovoltaikmoduls (1) ist.

3. Anordnung nach Anspruch 1 oder 2, **dadurch gekennzeichnet, dass** zumindest eine Halteeinrichtung (3) eine Festlegeeinrichtung (9) für das Photovoltaikmodul (1) in der Halteeinrichtung (3) aufweist.

4. Anordnung nach Anspruch 3, **dadurch gekennzeichnet, dass** die Festlegeeinrichtung (9) zumindest eine auf einer Gewindewelle (10) angeordnete Klinke (11) umfasst.

5. Anordnung nach Anspruch 4, **dadurch gekennzeichnet, dass** die Gewindewelle (10) der Festlegeeinrichtung (9) nach außen geführt ist und an ihrem freien Ende eine Werkzeugaufnahme hat.

6. Anordnung nach einem der vorhergehenden Ansprüche, **dadurch gekennzeichnet, dass** der Aufstellabschnitt ein längserstreckter und in sich etwa planer Abschnitt (6) des Profilelementes (5) ist.

7. Anordnung nach einem der vorhergehenden Ansprüche, **dadurch gekennzeichnet, dass** im Aufstellabschnitt Festlegeelemente (7) für das Profilelement (5) angeordnet sind.

8. Anordnung nach Anspruch 7, **dadurch gekennzeichnet, dass** die Festlegeelemente (7) Vorsprünge (8, 8`) mit Hinterschneidungen umfassen.

9. Anordnung nach Anspruch 8, **dadurch gekennzeichnet, dass** an der Fläche Anlageelemente (2) mit Vorsprüngen (8, 8`) und Hinterschneidungen zur Aufnahme der Vorsprünge (8, 8`) der Festlegeelemente (7) angeordnet sind.

10. Anordnung nach Anspruch 9, **dadurch gekennzeichnet, dass** die Anlageelemente (2) profilierte Profile, insbesondere doppelte T-Profile sind.

11. Anordnung nach einem der Ansprüche 1 bis 10, **dadurch gekennzeichnet, dass** zumindest eine Halteeinrichtung (3) am Profilelement (5) lageveränderlich angeordnet ist.

12. Anordnung nach einem der Ansprüche 1 bis 10, **dadurch gekennzeichnet, dass** das Profilelement (5) und die Halteeinrichtungen (3) aus einem Teil gefertigt sind.

13. Anordnung nach Anspruch 12, **dadurch gekennzeichnet, dass** die Festlegeeinrichtung (9) als eine Schraube (13) zur Verbindung zweier Halteeinrichtungen (3) ausgebildet ist.

14. Anordnung nach einem der vorhergehenden Ansprüche, **dadurch gekennzeichnet, dass** das Profilelement (5) und die Halteeinrichtungen (3) aus einem Metall oder aus einem Kunststoff gefertigt sind.

15. Anordnung nach einem der vorhergehenden Ansprüche, **dadurch gekennzeichnet, dass** das Profilelement (5) Auflageabschnitte zur Auflage von Ballastgewichten (15) aufweist.
